# EUROPEAN PATENT APPLICATION

(11) **EP 1 377 105 A2**
(43) Date of publication of application: **02.01.2004**
(21) Application number: 03254000.7
(22) Date of filing: 25.06.2003
(51) Int. Cl.: H04Q 9/00

(54) **Communication system, apparatus, method and wireless, battery-less sensor for monitoring assets**

(30) Priority: 26.06.2002 US 185599
(71) Applicant: Bentley Nevada, LLC, Minden, Nevada 89423 (US)
(72) Inventor: Nelson, Matthew A., Gardnerville, Nevada 89423 (US)
(74) Representative: Goode, Ian Roy

(57) **Abstract**

Wireless, battery-less, asset sensor and communication system (10) comprising battery-less sensor (40) integrally housed within a first housing and reader device (20) integrally housed within a second housing. Reader (20) is coupled to handheld portable data collector (PDA) (60) and wirelessly transmits a time varying signal S₁. When this signal is directed at battery-less sensor (40), battery-less sensor (40) derives power from the wirelessly transmitted signal, powers up, then measures/senses and converts analog signals (102) from an asset such as machine M to digital asset data (104). Digital asset data and optionally stored asset information is formatted to modulate the transmitted signal (S₁) for transmitting asset data and information back to the reader (20) wherein the modulated transmitted signal (S₂) is demodulated and communicated to the PDC (60).

## Description

The present invention relates generally to an asset sensing and communication systems and, in particular, to a wireless, battery-less, asset sensor and communication system for use with a portable data collector (PDC) device for monitoring, protecting and/or managing assets including a multifarious grouping of machinery and processes.

Today's asset sensing and communication systems such as vibration measurement systems are comprised of: wired, permanently mounted transducers and communication systems; wireless, battery powered, permanently and temporarily mounted transducers and communication systems; temporarily mounted, wireless, battery powered, hand-held transducer systems.

Wireless power and communication eliminates the high cost of permanent wiring.

Wired systems have a high associated cost. Each wire requires documentation, protective conduits, and installation. The installation cost of the wiring can quickly exceed the cost of the sensors.

Wireless, battery powered, transducer and communication systems eliminate the high cost of permanent wiring and can be found employed for use with a portable data collector (PDC).

However, these systems are problematic in a multiplicity of ways. For one thing, batteries have a fixed life, and even at today's electronic low power consumptions, the battery life may be limited to several years. When several thousands measurement points are considered, the batteries of four or more points could fail per day on the average. Additionally, battery replacement is both laborious and there are significant environmental issues associated with dead battery disposal. Furthermore, batteries also impose temperature limitations that may prevent the user from placing the sensor at the ideal measurement location.

Moreover, it is difficult to place temporarily mounted and hand held transducers at the exact same spot on the machine, at the same angle, and applied with the same pressure for providing optimum measurement consistency. Thus, wireless, battery powered, permanently mounted transducers will provide greater data consistency than either the temporarily mounted or hand held transducers. However, and as mentioned above, these systems are problematic in that the batteries have a fixed life, are laborious to replace, are subject to significant environmental issue, and impose temperature limitations that may prevent the user from placing the sensor at the ideal measurement location.

For the foregoing reasons, there is a need for solving the problems associated with wireless, battery powered, permanently and temporarily mounted transducer and communication systems and hand held transducer and communication systems.

The present invention is distinguished over the known prior art in a multiplicity of ways. For one thing, the present invention comprises a wireless, battery-less, asset sensor and communication system for providing wireless power transfer, wireless data transfer, and a sensor which can be permanently mounted to an asset. Hence, the present invention immediately solves all the battery problems associated with battery powered sensors some of which include: fixed battery life, laborious battery replacement, battery disposal concerns, and battery temperature limitations that may prevent placement of the sensor at the ideal measurement location. Furthermore, the present invention provides consistent wireless data transfer from a battery-less sensor which can be permanently mounted at an exact spot on an asset such as a machine while rigidly maintaining its mounting angle and applied pressure thereby providing optimum measurement consistency. Hence, the present invention provides a wireless, battery-less, asset sensor which in combination solves several important problems: first, wireless power eliminates, *inter alia,* the above delineated battery issues and second, wireless power and communication eliminates, *inter alia,* the high cost of permanent wiring. Additionally, the present invention provides a wireless, battery-less asset sensor which can be permanently mounted for providing greater data.

In one preferred form, the wireless, battery-less, asset sensor and communication system includes a battery-less sensor comprised of a transducer operatively coupled to an asset for measuring or sensing physical parameters or characteristics thereof, a sensor coil for receiving a transmitted signal from a reader coil in a reader device transmitting the signal through free space, and a power rectifier and regulator device coupled to the sensor coil for deriving power from the received transmitted signal and providing power for the battery-less sensor. The battery-less sensor further including: a clock generator and controller for, *inter alia,* generating a data rate clock from the received transmitted signal; a data converter for sampling and digitizing, under the orchestration of the clock generator and controller, said analog signals into digitized signals correlative to said measured asset parameters or characteristics by giving a binary code to each of n samples of the sensed analog signal wherein each binary code is correlative to an amplitude of the sensed analog signal at the time the analog signal was sensed; and a modulating means for modulating the received transmitted signal as a function of the digitized signals or as a function of the binary codes for creating a modulated signal transmitting information to the reader device correlative to the measured asset parameters or characteristics.

In one preferred form, the reader device includes an oscillator creating a time varying waveform having generally a constant frequency which drives the above mentioned reader coil for transmitting the above mentioned signal through free space. The reader device further includes: a demodulator operatively coupled to the reader coil for detecting changes in the transmitted signal; a signal conditioning circuit operatively coupled to the demodulator for transforming the detected changes in the transmitted signal into a series of pulses; and a microprocessor operatively coupled to the signal conditioning circuit for converting the series of pulses from the signal conditioning circuit into digital words and transmitting the digital words to a portable data collector operatively coupled to the microprocessor for monitoring, protecting and/or managing assets.

Thus, the present invention provides a novel battery-less sensor that employs a wirelessly transmitted signal from a reader device for wirelessly receiving power from and wirelessly transmitting data to the reader device which is correlative to asset parameters or characteristics measured or sensed by the battery-less sensor. The reader device in turn conditions and processes the information and transmits it to a portable data collector (PDC) device for monitoring, protecting and/or managing assets including a multifarious grouping of machinery and processes.

Moreover, having thus summarized the invention, it should be apparent that numerous structural modifications and adaptations may be resorted to without departing from the scope and fair meaning of the present invention as set forth as described hereinbelow by the claims.

Accordingly, a primary object of the present invention is to provide a new, novel and useful wireless, battery-less, asset sensor and communication system: apparatus and method.

A further object of the present invention is to provide a system as characterized above for use with a portable data collector (PDC) device for monitoring, protecting and/or managing assets including a multifarious grouping of machinery and processes.

A further object of the present invention is to provide a system as characterized above which provides a battery-less sensor and wireless data/power communication system for use with a portable data collector (PDC) device for wirelessly powering the battery-less sensor, sensing physical parameters or characteristics of an asset and wirelessly communicating data from the battery-less sensor to the portable data collector (PDC) which is correlative to the measured asset parameters or characteristics.

Another further object of the present invention is to provide a system as characterized above which provides a battery-less sensor for eliminating the fixed life of batteries, the laborious and time consuming task of battery replacement, and the environmental issues associated with dead battery disposal.

Another further object of the present invention is to provide a system as characterized above which provides a battery-less sensor for eliminating batteries which impose temperature limitations that may prevent the sensor from being placed at ideal measurement locations.

Another further object of the present invention is to provide a system as characterized above which provides wireless power and data transmission that eliminates the high cost of permanent wiring and that eliminates the associated cost of wired systems which include wire documentation, protective conduits, and installation which can quickly exceed the cost of the sensors.

Another further object of the present invention is to provide a system as characterized above which provides wireless power and data transmission for eliminating batteries by transferring power across an open air interface using two tuned coils.

Another further object of the present invention is to provide a system as characterized above which, in one embodiment, provides a permanently mounted battery-less sensor which can be placed at an exact spot on an asset, at an exact angle, and at the same applied pressures thereby providing more consistent data than temporarily mounted and hand held transducers.

Another further object of the present invention is to provide a system as characterized above which, in one embodiment, provides a permanently mounted battery-less vibration sensor interfacing with a handheld portable data collector.

Viewed from a first vantage point, it is an object of the present invention to provide a battery-less sensor for an asset sensing and communication system, said battery-less sensor comprising in combination: a transducer operatively coupled to an asset for sensing physical asset parameters and outputting analog signals correlative thereto; means for receiving and deriving power from a wirelessly transmitted signal; means, operatively coupled to both said power deriving means and said transducer, for sampling and digitizing said analog signals into digitized signals; means, operatively coupled to both said receiving means and to said sampling and digitizing means, for modulating said received transmitted signal as a function of said digitized signals for transmitting data correlative to said sensed physical asset parameters such that said received transmitted signal is used both for wirelessly providing power to said battery-less sensor and for wirelessly transmitting data from said battery-less sensor which is correlative to said sensed physical asset parameters.

Viewed from a second vantage point, it is an object of the present invention to provide a battery-less sensor for an asset sensing and communication system, said battery-less sensor comprising in combination: a transducer operatively coupled to an asset for sensing physical asset parameters and outputting analog signals correlative to said sensed physical asset parameters; a coil for receiving a transmitted signal; power means connected to said coil for deriving power from said received transmitted signal; circuit means, connected to and powered by said power means, said circuit means including sampling means and modulating means; said sampling means, connected to said transducer, for sampling and digitizing said analog signals into digitized signals correlative to said sensed physical asset parameters; said modulating means, connected to said sampling means and said coil, for modulating said received transmitted signal for transmitting data that is correlative to said sensed physical asset parameters of the asset, and wherein said battery-less sensor receives power from said wirelessly transmitted signal for powering said battery-less sensor and modulates said wirelessly transmitted signal with data correlative to said sensed physical asset parameters of the asset.

Viewed from a third vantage point, it is an object of the present invention to provide an asset parameter sensing and communication system comprising in combination: a reader device comprising in combination: means for transmitting a signal through free space; means, operatively coupled to said transmitting means, for detecting changes in said transmitted signal, converting said detected changes into digital values and transmitting said digital values to a portable data collector; a battery-less sensor comprising in combination: a transducer operatively coupled to an asset for measuring physical asset parameters and outputting analog signals correlative thereto; means for receiving and deriving power from said transmitted signal; means, operatively coupled to both said power deriving means and said transducer, for sampling and digitizing said analog signals into digitized signals correlative to said measured physical asset parameters; means, connected to said sampling and digitizing means, for modulating said received transmitted signal as a function of said digitized signals correlative to said measured physical asset parameters for creating a modulated transmitted signal by changing said transmitted signal transmitted from said reader; and wherein said detecting means of said reader detects and converts said modulated transmitted signal into digital values and transmits said digital values to the portable data collector for further processing.

Viewed from a fourth vantage point, it is an object of the present invention to provide an asset parameter sensing and communication system comprising in combination: two tuned coils using an open air interface for transmitting a signal through free space for wirelessly transmitting data correlative to measured physical asset parameters and power across an open air interface, said two tuned coils comprised of a sensor coil and a reader coil; a transducer operatively coupled to an asset for measuring physical asset parameters and outputting analog signals correlative thereto; means, operatively coupled to said sensor coil, for deriving power from said transmitted signal; means, operatively coupled to both said power deriving means and said transducer, for sampling and digitizing said analog signals into digitized signals correlative to said measured physical asset parameters; means, connected to said sampling and digitizing means, for modulating said transmitted signal as a function of said digitized signals correlative to said measured physical asset parameters such that said modulating means causes changes in said transmitted signal; and means, operatively coupled to said reader coil, for detecting said changes in said transmitted signal, converting said detected changes into digital values and transmitting said digital values to a portable data collector for monitoring the asset as a function of said measured physical asset parameters.

Viewed from a fifth vantage point, it is an object of the present invention to provide an asset parameter sensing and communication system comprising in combination: a battery-less sensor and a reader device; said reader device comprising in combination: an oscillator means for creating a time varying waveform having generally a constant frequency; a reader coil operatively coupled to said oscillator means for transmitting a signal through free space; a demodulator means operatively coupled to said reader coil for detecting changes in amplitude of the said transmitted signal; a signal conditioning circuit operatively coupled to said demodulator for transforming said detected changes in amplitude of said transmitted signal a series of digital pulses; a first microprocessor operatively coupled to said signal conditioning circuit for converting said series of digital pulses from said signal conditioning circuit into digital words and transmitting said digital words to a portable data collector operatively coupled to said first microprocessor; a battery-less sensor comprising in combination: a transducer operatively coupled to an asset for measuring physical asset parameters and outputting analog signals correlative thereto; a sensor coil for receiving said transmitted signal from said reader coil; power means connected to said sensor coil for deriving power from said received transmitted signal; circuit means, connected to and powered by said power means, said circuit means including sampling means and modulating means; said sampling means, connected to said transducer, for sampling and digitizing said analog signals into digitized signals correlative to said measured physical asset parameters; said modulating means, connected to said sampling means and said sensor coil, for modulating said received transmitted signal as a function of said digitized signals for creating a modulated signal transmitting data to said reader correlative to said measured physical asset parameters such that said battery-less sensor employs said transmitted signal for wirelessly receiving power from said reader and wirelessly transmitting information to said reader, and wherein said modulated signal causes said changes in amplitude of said transmitted signal which are detected by said demodulator means, transformed by said signal conditioning circuit, converted by said microprocessor, and transmitted to the portable data collector by said microprocessor for monitoring the asset as a function of said measured physical asset parameters.

Viewed from a sixth vantage point, it is an object of the present invention to provide a method for sensing and communicating asset parameters, the steps including: mounting a battery-less sensor to an asset for sensing physical asset parameters; powering said battery-less sensor by holding a reader device adjacent said battery-less sensor and wirelessly transmitting a signal from said reader device to said battery-less sensor; sensing and digitizing physical asset parameters with said battery-less sensor; modulating, with said battery-less sensor, said wirelessly transmitted signal as a function of said digitized physical asset parameters; transmitting, with said battery-less sensor, data to said reader correlative to said sensed physical asset parameters such that said battery-less sensor is wirelessly powered by said wirelessly transmitted signal from said reader and wirelessly transmits information to said reader by modulating said wirelessly transmitted signal from said reader.

Viewed from a seventh vantage point, it is an object of the present invention to provide the above method which includes the further steps of reading coded information from a memory within said battery-less sensor, modulating said wirelessly transmitted signal from said reader as a function of said coded information for transmitting information correlative to said coded information stored within said memory such that said battery-less sensor is simultaneously wirelessly powered by and wirelessly transmits information to said reader by modifying said wirelessly transmitted signal from said reader.

These and other objects and advantages will be made manifest when considering the following detailed specification when taken in conjunction with the appended drawings, in which:
Figure 1 is a perspective view of a wireless, battery-less, asset sensor and communication system pursuant to the present invention and shown wirelessly interposed between an asset (e.g., a rotating machine) and a portable data collector for monitoring, protecting and/or managing the asset.
Figure 2 is a functional diagram of the wireless, battery-less, asset sensor and communication system pursuant to the present invention.
Figure 3 is a functional schematic diagram of the wireless, battery-less, asset sensor and communication system pursuant to the present invention.
Figure 4 is a flowchart view of use and operation of the wireless, battery-less, asset sensor and communication system pursuant to the present inventions.
Considering the drawings, wherein like reference numerals denote like parts throughout the various drawing figures, reference numeral 10 is directed to the wireless, battery-less, asset sensor and communication system according to the present invention.

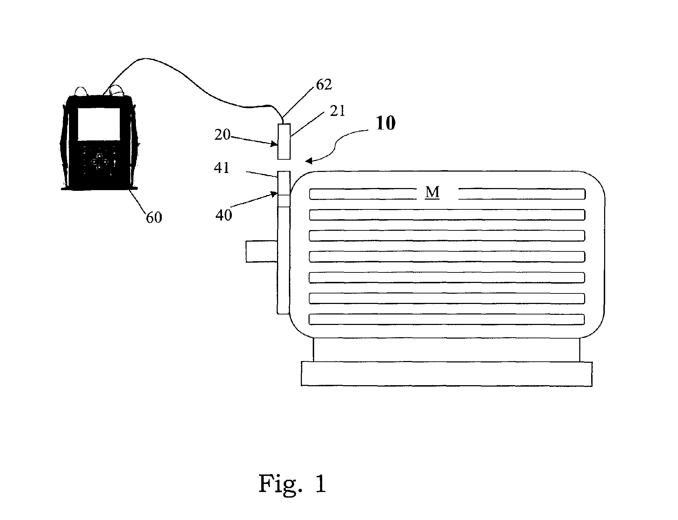

In essence, and referring to the drawings, particularly figure 1, the wireless, battery-less, asset sensor and communication system 10 is comprised of an interrogator or reader device 20 integrally housed within housing 21 and a battery-less sensor 40 integrally housed within a separate housing 41. The reader 20 is coupled to a handheld portable data collector (PDC) 60 via connection 62 and outputs a time varying electromagnetic radio frequency wave or signal S₁. When this field is directed at the battery-less sensor 40, the battery-less sensor 40 powers up, and measures and converts analog signals measured from an asset such as machine M to digital data. This digital data, along with optional stored digital information about the asset is formatted to modulate the time varying electromagnetic radio frequency signal S₁ for transmitting the digital data correlative to measured physical asset parameters and stored digital information back to the reader 20 via wave or signal S₂ which is demodulated, conditioned and communicated to the PDC 60.

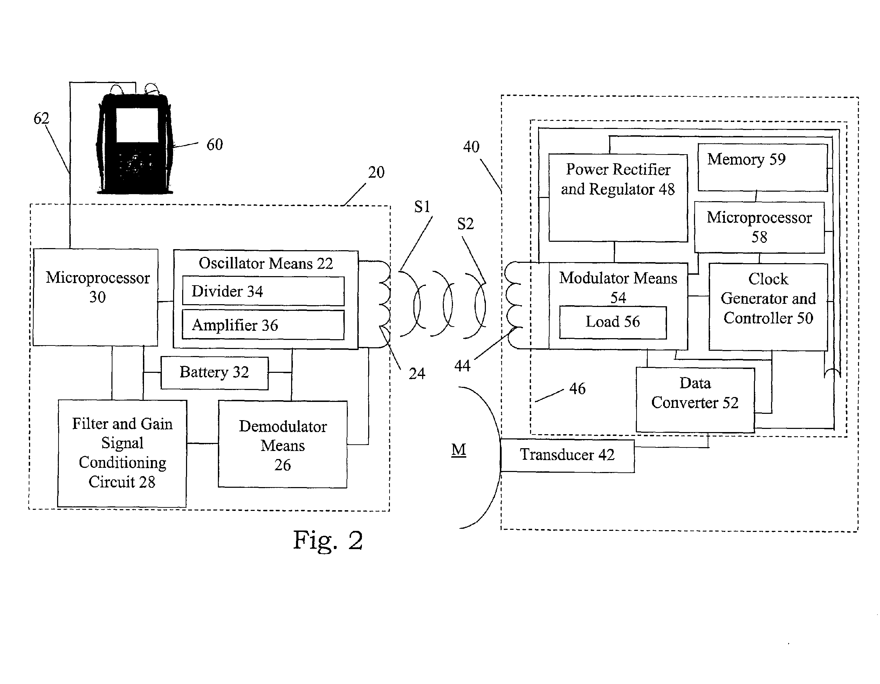

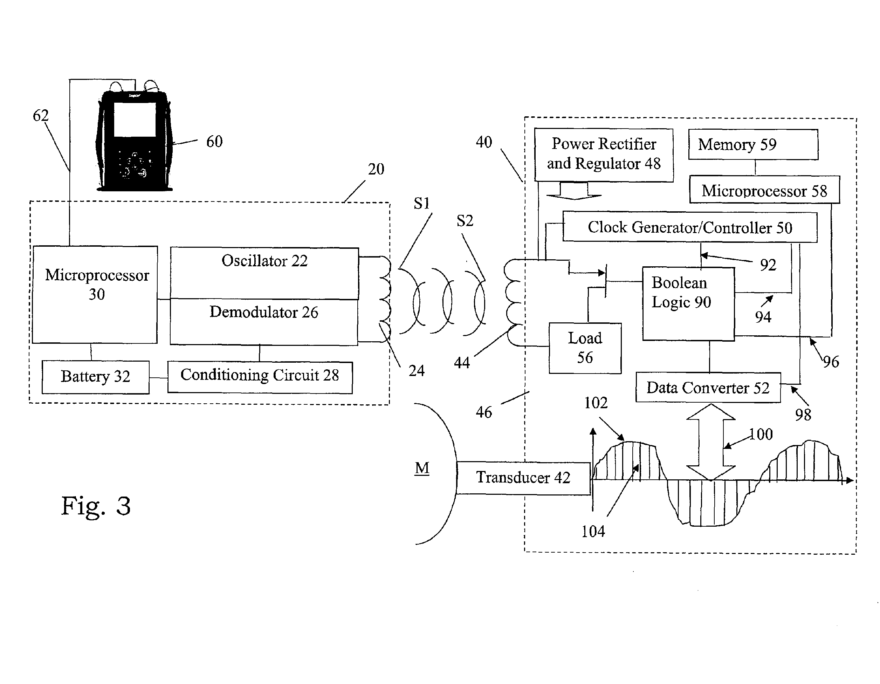

More specifically, and referring to figures 2 and 3, the reader device 20 is comprised of an oscillator means 22 connected to an antenna or reader coil 24. The reader coil 24 is connected to a demodulator means 26 which, in turn, is connected to a filter and gain signal conditioning circuit 28. The filter and gain signal conditioning circuit 28 is connected to a microprocessor 30. The reader 20 may be powered either by the PDC 60 or from an internal battery 32 which is connected to and provides power to the oscillator means 22, the demodulator means 26, the filter and gain signal conditioning circuit 28, and the microprocessor 30 as needed.

The microprocessor 30 communicates with the Portable Data Collector (PDC) 60 via, for example, a cable 62 providing a serial communication link. One example of the Portable Data Collector (PDC) 60 is disclosed in the commonly assigned pending U.S. patent application serial number 09/603,659, filed June 23, 2000, by Coyle, et al, entitled "Portable Data Collector and Analyzer: Apparatus and Method".

Oscillator means 22, reader coil 24, demodulator means 26, filter and gain signal conditioning circuit 28, microprocessor 30, and internal battery 32 (if employed) are preferably all integrally housed within housing 21 (figure 1).

The battery-less sensor 40 is comprised of a transducer 42 such as a velocity transducer, piezoelectric sensor, thermocouple sensor, or other self-exciting or low power sensor which is operatively coupled to an asset such as the machine M for measuring physical parameters or characteristics thereof, a power input/communicator coil or sensor coil 44, and electronics 46. Transducer 42, sensor coil 44, and electronics 46 are all integrally housed within housing 41 (figure 1) which is operatively coupled (e.g., by being permanently mounted by a threaded or other coupling as is known in the art) to an asset such as, for example, machine asset M.

The electronics 46 include a power rectifier and regulator 48, a clock generator and controller 50, a data converter 52, and a modulator means 54 which may include a load 56. The electronics 46 can optionally include a microprocessor 58 and non-volatile memory 59 for providing asset information such as asset name, measurement point name, and alarm set points.

The sensor coil 44 is connected to the power rectifier and regulator 48, the clock generator and controller 50, and the modulator means 54. In turn, the power rectifier and regulator 48 is connected to, as required, the transducer 42, the clock generator and controller 50, the data converter 52, the modulator means 54, the microprocessor 58, and the non-volatile memory 59 for providing power to these connected components (42, 50, 52, 54, 58, and 59) as required. The clock generator and controller 50 is connected to and provides a clock signal for the microprocessor 58, the data converter 52, and the modulator means 54 and a start signal.

It is important to note that the battery-less sensor 40 remains unpowered until the reader coil 24 of the reader 20 is energized and brought near the sensor coil 44. The battery-less sensor 40 then powers up, generates a clock from the reader signal S₁ via the clock generator and controller 50, converts the transducer data via data converter 52, and communicates out the data to the reader 20 via signal S₂ obtained by the modulator means 54 modulating the load 56 on the input power waveform signal S₁ as a function of converted traducer data.

More particularly, the reader 20 is used to provide power to the battery-less sensor 20 by the oscillator means 22 creating a time varying waveform of a constant frequency which switches a constant current through the reader coil 24. The current through the reader coil 24 produces the time varying electromagnetic radio frequency (RF) wave or signal S₁ (also referred to as a carrier signal) which produces flux that links through the power input/communicator coil or sensor coil 44 and powers the battery-less sensor 40. The current through the reader coil 24 also creates a voltage proportional to the parallel impedance of the reader coil 24. It should be noted that the frequency must be high enough to serve as a carrier for a data signal at a desired data rate with a minimum of, for example, 8 cycles per data bit. A frequency of 1 MHz should be suitable for most applications.

The oscillator means 22 can take the form of, for example, a crystal oscillator which provides a signal having a stable operating frequency which may be divided down by divider 34 and amplified by amplifier 36 before sending the oscillating signal to the reader coil 24. The oscillator means 22 can also take the form of, for example, a discrete component oscillator such as an emitter coupled oscillator, or the like wherein the reader coil 24 forms the inductor of a tank circuit as is known to one skilled in the art, informed by the present disclosure.

Once the reader coil 24 is energized and placed adjacent the sensor coil 44 the reader coil 24 forms a transformer type coupling with the sensor coil 44.

The amount of power transferred across the air interface is a function of the number of turns of the coils 24, 44, the amount of magnetic flux generated by the reader coil 24, and the amount of flux linkage between the two coils 24, 44. Additionally, the distance in which the reader 20 will be able to power and read data from the battery-less sensor 40 is a function of both the geometry of the reader and sensor coils 24, 44 and the amount of current passed through the reader coil 24. For example, a 35 mm sensor coil 44 of forty four turns will provide 2 mW at 0.75 inch separation when 3 mA are passed through a similar reader coil 24 at the reader at a frequency of 1 MHz.

Preferably, the sensor coil 44 is tuned to the same resonant frequency as the reader coil 24 and the two coils 24, 44 are air core coils such that by bringing the reader 20 into proximity of the battery-less sensor 40 results in causing the reader coil 24 and sensor coil 44 to link flux such that an air core transformer is formed and the sensor coil 44 outputs a sensor coil signal.

The sensor coil signal is then fed to the power rectifier and regulator 48 wherein the power rectifier and regulator 48 rectifies the signal from the reader, filters it, and regulates the voltage for use by the connected components (42, 50, 52, 54, 58, and 59) as required.

In one form, the power rectifier and regulator 48 rectifies the signal from the reader, filters it, and regulates the voltage to 3.3 Vdc for use by the connected components (42, 50, 52, 54, 58, and 59) as required. The power required by the circuit is a function of the measurement being made. The electronics combined with a self powered transducer (Velocity transducer or Thermocouple) may consume less than 2 mW. An active transducer, such as an eddy-current displacement transducer, may require up to 15 mW and thus, would require a change in the geometry of the coil and/or would require the coil being driven with a current greater than the 3 mA delineated hereinabove as should be evident to those having ordinary skill in the art, informed by the present disclosure.

Once the clock generator and controller 50 is powered up it detects the frequency of the signal from the reader 20 via the sense coil 44 and converts it to a digital clock signal such as a zero volt and positive volt clock signal. This digital clock signal is divided by a set factor to create a data rate clock signal. In one form, the clock generator and controller 50 detects the frequency of the signal from the reader and converts it to a zero to three point three (3.3) volt clock. This clock is divided by a set factor such as 8, 10, 12, 14, 16 or 32 to create the data rate clock.

The data rate clock signal is then fed to the data converter 52 and to the modulator means 54. As the data currently in the data converter 52 is unusable, a data sample of n bits must be clocked out of the data converter 52 (where n is the data converter 52 resolution in bits). During this time, the clock generator and controller 50 generates a reset signal that tells the modulator means 54 to load the sensor coil 44 to create a start pulse.

In one form, the data rate clock signal is fed to the data converter 52 in the form of an analog to digital converter (A/D converter) and as a result of the initial data in the A/D being unusable, a data sample of n bits must be clocked out of the A/D converter (where n is the A/D resolution in bits). A micropower A/D converter such as the Texas Instruments TLV1548 may be used as the data converter 52 for converting the analog transducer signals into a digital words. Texas Instruments TLV1548 is a 10 bit, 2.7V A/D that requires only 1.05 mW of power. Conversion time is 10 uS. An alternative approach is to use a Microchip P16F87X family of microprocessors with built in 10 bit A/D converter 52. Additional circuitry may be employed on the front end of the A/D converter to adjust the input signal to fit the input range of the A/D or to prevent aliasing. Preferably, the conversion data is clocked out one bit at a time to the modulator means 54 and the conversion rate is chosen to be sufficiently high as to meet the Nyquist criteria and to prevent aliasing. The frequency response of a typical Velocity transducer is -3 dB at 1000 Hz.

As mentioned hereinabove, during the initial clocking out of n bits from the data converter 52, the control circuit generates a reset signal that is tells the modulator means 54 to load the coil 44 to create the start pulse (e.g., a 10 bit time start pulse)

By this time the data converter 52 is converting analog signals from the transducer to digital data (coded words correlative to discrete amplitudes of the analog signals measured from an asset such as machine M by the transducer 42) as a function of the data rate clock signal.

The transducer 42 of the battery-less sensor 40 can take the form of a vibration, temperature, or other transducer measuring physical asset parameters or characteristics of asset such as machine M. The transducer 42 may be either self powered such as a velocity pickup, thermocouple, or piezo-electric film or crystal, or may be an active transducer such as an extremely low powered transducer. Thus, the transducer 42 outputs an analog signal proportional to physical asset parameters or characteristics and the data converter 52 converts the analog signals 102 to digital data or coded words 104 each correlative to a discrete amplitude of the analog signals 102 measured from an asset such as machine M by the transducer 42 (please see figure 3).

The data converter 52 then communicates out the digital data to the reader 20 via the modulator means 54 modulating the load 56 on the sensor coil 44 and thus, on the input power waveform for creating modulated signal S₂ which in one example is carrier signal S₁ amplitude modulated.

More particularly, when the modulation controller changes the load 56 on the sensor coil 44, the load is reflected back on the reader coil 24 and the amplitude of the oscillator signal drops. Preferably, the size of the reader coil 24 is maximized to within reasonable limits for the hand-held reader device 20. A coil size of approximately 35 mm provides sufficient power transfer without being large and bulky.

In one form, the modulator means 54 switches a load across the device antenna coil according to the data passed to it from the A/D converter 52. Since the sense coil 44 and the reader coil 24 form a transformer, the change in load caused by the modulator means 54 will cause a change in voltage at the reader coil 24. The impedance of the reader coil 24 changes as a function of the load being shifted across the sensor coil 44. Since a fixed current is run through the reader coil 24, this change in reader coil impedance results in a change in voltage at the reader coil 24. Either a resistive or reactive load 56 at the sensor coil 44 will produce a change at the reader coil 24. The change in reader coil voltage will be seen as a small modulation of the oscillator signal.

It should be noted that a capacitive load used as load 56 will shift the resonant frequency of the sensor coil 44 and provides a large change in reader coil impedance. Thus, as we move off of resonance, the power to the device drops. To compensate for this, the sensor coil 44 should be tuned to be slightly higher than the resonant frequency when the load is not switched in, and then drop symmetrically about the reader resonant frequency when the capacitive load is switched in.

Simple Boolean logic 90 and a FET may be used to create the start pulse and switch in the load 56 as should be evident to those having ordinary skill in the art, informed by the present disclosure.

As mentioned above, the microprocessor 58 and/or Non-volatile memory 59 could be added for providing asset information (such as asset name, measurement point name, and alarm set points) digitally to the reader. In particular, this information is preferably sent first (preamble information) followed by the data samples and could include a field in the transmitted information that would indicate the number of words of information that are to be sent. The asset information could include: plant name, train name, machine name, point ID, measurement type, serial number, date of last calibration, alarm type (hi, low, window, et cetera), alarm values, units, full scale, scale factor, sample rate, self test information, and the transducer and/or asset manufacturer. Micropower microprocessors may be used for the microprocessor 58 and examples of Micropower microprocessors include the Texas Instruments MSP430 family and the Microchip P16F87X family. At clock rates below 100 KHz, either of these should dissipate below 0.5 mW.

The demodulator means 26 detects the changes in oscillator signal amplitude caused by the modulation means 54. The output the demodulator means 26 is a signal proportional to the amplitude envelope of the modulated oscillator signal. The demodulator means or envelope detector 26 can be in the form of a simple diode peak or peak-to-peak capacitor filtered detector circuit as is known to those having ordinary skill in the art, informed by the present disclosure.

The filter and gain signal conditioning circuit 28 removes noise and converts the output of the demodulator means 26 into a series of digital pulses that correspond to the transducer measured data. Various circuits can be employed for the filter and gain signal conditioning circuit 28 as should now be evident to those having ordinary skill in the art, informed by the present disclosure.

The microprocessor reads the series of digital pulses from the filter and gain signal conditioning circuit 28 and converts the data into digital words. The words are then formed into packets by the microprocessor 30 and are communicated to the PDC over a serial link provided by cable 62. In other words, the microprocessor performs data decoding and communicates with the PDC 60 through an RS-232 or other serial interface protocol.

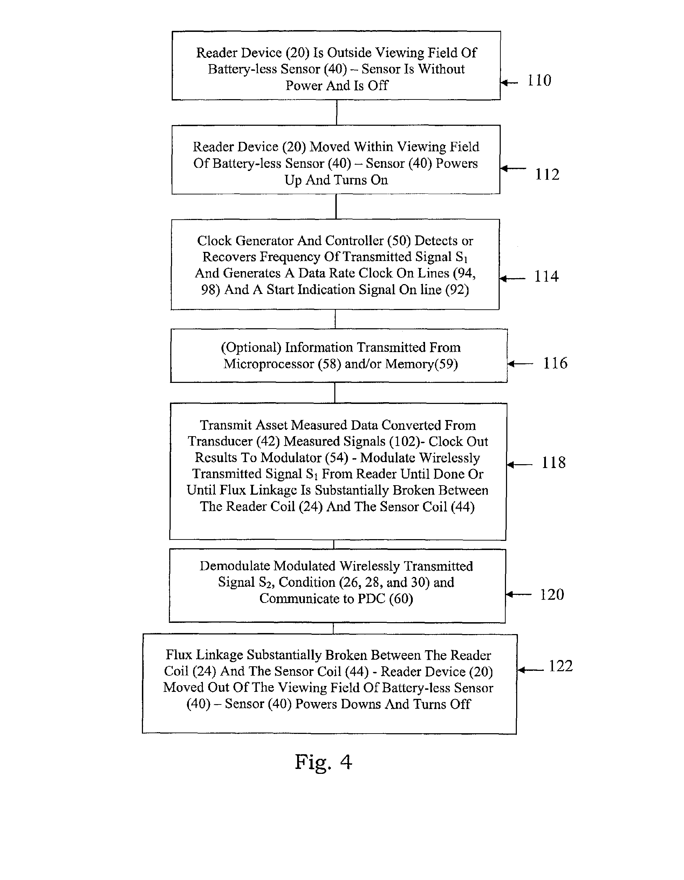

In use and operation, and referring figures 1 through 4, the wireless, battery-less, machine sensor 40 is coupled to an asset such as machine M for measuring and transmitting physical parameters or characteristics of the asset, such as vibration or temperature, to a hand held portable data collector 60 (figure 1). The reader device 20 is coupled to the portable data collector 60 and starts the sequence of use and operation (outlined in figure 4) as being outside the viewing field of the battery-less sensor 40. The Sensor 40 is without power (unpowered) and is off (Block 110, Figure 4).

When the reader has been moved into the viewing field of the sensor coil 44 of the battery-less sensor (Block 112, Figure 4), power is transferred to the sensor coil 44 and voltage and current are produced. When the produced voltage reaches a level suitable for powering the battery-less sensor 40 it powers up and turns on (Block 112, Figure 4).

After powering up, the clock generator and controller 50 begins to detect or recover the frequency of the input or transmitted signal S₁ (Block 114, Figure 4). When a valid clock has been recovered or detected, the clock generator and controller 50 begins sending clock pulses to the A/D converter 52 via line 98, and a start indication signal to the modulator means 54 (e.g., the Boolean logic 90 via line 94). Please see block 114, figure 4.

The first data clocked out from the A/D is not valid. During this time a start indication is held at line 92 (figure 3) and the modulator means 54 transmits the start pulse to the reader device 20 (Block 114, Figure 4).

After the first conversion is completed, valid conversions of the analog signals from the transducer 42 begin.

Any information, such as asset information from the microprocessor 58 and/or non-volatile RAM memory 59 (if present) can be transmitted before the first data value (Block 116, Figure 4).

After the first conversion is complete, the A/D converter 52 will continue to convert the analog signals from the transducer 42 and clock out the results to the modulator means 54 which in turn transmits data correlative to the analog signals back to the reader device 20 until the reader device is removed from the proximity of the battery-less sensor 40 wherein power is removed (Block 118, Figure 4).

The information correlative to asset information (if sent) and to the analog signals correlative to sensed or measured physical asset parameters or characteristics is sent back to the reader device 20 where it is demodulated and communicated to the PDC 60 (Block 120, Figure 4).

When power is removed, the battery-less sensor 40 returns to the off state (Block 122, Figure 4).

Other methods for powering a permanently mounted transducer may include optical power or physical contacts. However, neither optical power transfer nor contacts are very effective in a dirty machinery environment. Contacts also have a disadvantage of the time to make the connection.

For completeness, various aspects of the invention are set out in the following numbered clauses:
1. A battery-less sensor for an asset sensing and communication system, said battery-less sensor comprising in combination:
   a transducer (42) operatively coupled to an asset (M) for sensing physical asset parameters and outputting analog signals (102) correlative thereto;
   means (44, 48) for receiving and deriving power from a wirelessly transmitted signal;
   means (52), operatively coupled to both said power deriving means and said transducer, for sampling and digitizing said analog signals (102) into digitized signals (104);
   means (54), operatively coupled to both said receiving means and to said sampling and digitizing means, for modulating said received transmitted signal as a function of said digitized signals for transmitting data correlative to said sensed physical asset parameters such that said received transmitted signal is used both for wirelessly providing power to said battery-less sensor (40) and for wirelessly transmitting data from said battery-less sensor which is correlative to said sensed physical asset parameters.
2. The battery-less sensor (40) of clause 1 wherein said receiving and deriving means is comprised of a sensor coil (44) for receiving the wirelessly transmitted signal and a power rectifier and regulator device (48) deriving power from said received transmitted signal.
3. The battery-less sensor (40) of clause 2 wherein said sampling and digitizing means (52) is comprised of an analog to digital converter for converting said analog signals into digitized signals correlative to said measured asset parameters by giving a binary code to each of n samples of the sensed analog signal wherein each binary code is correlative to an amplitude of said analog signal at a time said analog signal was sensed by said transducer (42).
4. The battery-less sensor (40) of clause 3 wherein said modulating means (54) includes means for switching a load (56) across said sensor coil (44) as a function of said digitized signals correlative to said sensed asset parameters such that said received transmitted signal is used both for wirelessly providing power to said battery-less sensor (40) and for wirelessly transmitting data from said battery-less sensor (40) which is correlative to said sensed physical asset parameters.
5. A battery-less sensor for an asset sensing and communication system, said battery-less sensor comprising in combination:
   a transducer (42) operatively coupled to an asset (M) for sensing physical asset parameters and outputting analog signals (102) correlative to said sensed physical asset parameters;
   a coil (44) for receiving a transmitted signal;
   power means (48) connected to said coil for deriving power from said received transmitted signal;
   circuit means (46), connected to and powered by said power means, said circuit means including sampling means (52) and modulating means (54);
   said sampling means (52), connected to said transducer (42), for sampling and digitizing said analog signals into digitized signals (104) correlative to said sensed physical asset parameters;
   said modulating means (54), connected to said sampling means (52) and said coil (44), for modulating said received transmitted signal for transmitting data that is correlative to said sensed physical asset parameters of the asset, and
      wherein said battery-less sensor (40) receives power from said wirelessly transmitted signal for powering said battery-less sensor and modulates said wirelessly transmitted signal with data correlative to said sensed physical asset parameters of the asset.
6. The battery-less sensor of clause 5 further including a memory (59) in which coded information is stored, a processor means (58) operatively coupled to said memory and to said modulating means for reading said coded information from said memory and passing said coded information to said modulating means such that said modulating means modulates said received transmitted signal as a function of said coded information for transmitting information correlative to said coded information such that said battery-less sensor simultaneously receives power and communicates information by the manipulation of said transmitted signal received by said coil.
7. The device of clause 5 wherein said coil (44) is an air core coil.
8. The device of clause 5 wherein the asset is a machine.
9. The device of clause 8 wherein said sensed physical asset parameters are vibration measurements.
10. An asset parameter sensing and communication system comprising in combination:
   a reader device (20) comprising in combination:
   means (22, 24) for transmitting a signal through free space;
   means (26, 28, 30), operatively coupled to said transmitting means, for detecting changes in said transmitted signal, converting said detected changes into digital values and transmitting said digital values to a portable data collector;
   a battery-less sensor (40) comprising in combination:
      a transducer (42) operatively coupled to an asset for measuring physical asset parameters and outputting analog signals (102) correlative thereto;
      means (48) for receiving and deriving power from said transmitted signal;
      means (52), operatively coupled to both said power deriving means and said transducer, for sampling and digitizing said analog signals into digitized signals (104) correlative to said measured physical asset parameters;
      means (54), connected to said sampling and digitizing means, for modulating said received transmitted signal as a function of said digitized signals correlative to said measured physical asset parameters for creating a modulated transmitted signal by changing said transmitted signal transmitted from said reader; and
         wherein said detecting means (26) of said reader detects and converts said modulated transmitted signal into digital values and transmits said digital values to the portable data collector (60) for further processing.
11. The device of clause 10 wherein said means for transmitting said signal through free space and said means for receiving said transmitted signal includes two tuned coils (24, 44) using an open air interface for transferring power and data correlative to said measured physical asset parameters across an open air interface using two tuned coils.
12. The device of clause 11 wherein the asset is a machine.
13. The device of clause 12 wherein said measured physical asset parameters are vibration signals engendered by the asset.
14. An asset parameter sensing and communication system comprising in combination:
   two tuned coils (24, 44) using an open air interface for transmitting a signal through free space for wirelessly transmitting data correlative to measured physical asset parameters and power across an open air interface, said two tuned coils comprised of a sensor coil (44) and a reader coil (24);
   a transducer (42) operatively coupled to an asset for measuring physical asset parameters and outputting analog signals (102) correlative thereto;
   means (48), operatively coupled to said sensor coil, for deriving power from said transmitted signal;
   means (52), operatively coupled to both said power deriving means and said transducer, for sampling and digitizing said analog signals into digitized signals correlative to said measured physical asset parameters;
   means (54), connected to said sampling and digitizing means, for modulating said transmitted signal as a function of said digitized signals correlative to said measured physical asset parameters such that said modulating means causes changes in said transmitted signal; and
   means (26, 28, 30), operatively coupled to said reader coil, for detecting said changes in said transmitted signal, converting said detected changes into digital values and transmitting said digital values to a portable data collector for monitoring the asset as a function of said measured physical asset parameters.
15. The device of clause 14 wherein the asset is a machine.
16. The device of clause 15 wherein and said measured physical asset parameters are vibration signals engendered by the asset.
17. An asset parameter sensing and communication system comprising in combination:
   a battery-less sensor (40) and a reader device (20);
   said reader device (20) comprising in combination:
      an oscillator means (22) for creating a time varying waveform having generally a constant frequency;
      a reader coil (24) operatively coupled to said oscillator means for transmitting a signal through free space;
      a demodulator means (26) operatively coupled to said reader coil for detecting changes in amplitude of the said transmitted signal;
      a signal conditioning circuit (28) operatively coupled to said demodulator for transforming said detected changes in amplitude of said transmitted signal a series of digital pulses;
      a first microprocessor (30) operatively coupled to said signal conditioning circuit for converting said series of digital pulses from said signal conditioning circuit into digital words and transmitting said digital words to a portable data collector (60) operatively coupled to said first microprocessor;
      the battery-less sensor (40) comprising in combination:
         a transducer (42) operatively coupled to an asset for measuring physical asset parameters and outputting analog signals correlative thereto;
         a sensor coil (44) for receiving said transmitted signal from said reader coil;
         power means (48) connected to said sensor coil for deriving power from said received transmitted signal;
         circuit means (46), connected to and powered by said power means, said circuit means including sampling means (52) and modulating means (54);
         said sampling means, connected to said transducer, for sampling and digitizing said analog signals into digitized signals correlative to said measured physical asset parameters;
         said modulating means, connected to said sampling means and said sensor coil, for modulating said received transmitted signal as a function of said digitized signals for creating a modulated signal transmitting data to said reader device correlative to said measured physical asset parameters such that said battery-less sensor employs said transmitted signal for wirelessly receiving power from said reader device and wirelessly transmitting information to said reader device, and
         wherein said modulated signal causes said changes in amplitude of said transmitted signal which are detected by said demodulator means, transformed by said signal conditioning circuit, converted by said microprocessor, and transmitted to the portable data collector by said microprocessor for monitoring the asset as a function of said measured physical asset parameters.
18. The asset parameter sensing and communication system of clause 17 wherein said battery-less sensor further includes a memory (59) in which coded asset information is stored, a processor means (58) operatively coupled to said memory and to said modulating means for reading said coded asset information from said memory and passing said coded information to said modulating means such that said modulating means modulates said transmitted signal as a function of said coded asset information for transmitting information correlative to said coded asset information such that said battery-less sensor simultaneously receives power and communicates information by manipulating said transmitted signal sent through free space.
19. A method for sensing and communicating asset parameters, the steps including:
   mounting a battery-less sensor (40) to an asset for sensing physical asset parameters;
   powering said battery-less sensor by holding a reader device (20) adjacent said battery-less sensor and wirelessly transmitting a signal from said reader device to said battery-less sensor;
   sensing and digitizing physical asset parameters with said battery-less sensor;
   modulating, with said battery-less sensor, said wirelessly transmitted signal as a function of said digitized physical asset parameters;
   transmitting, with said battery-less sensor, data to said reader device (20) correlative to said sensed physical asset parameters such that said battery-less sensor (40) is wirelessly powered by said wirelessly transmitted signal from said reader device (20) and wirelessly transmits information to said reader device (20) by modulating said wirelessly transmitted signal from said reader device (20).
20. The method of clause 19 further including the steps of reading coded information from a memory (59) within said battery-less sensor, modulating said wirelessly transmitted signal from said reader as a function of said coded information for transmitting information correlative to said coded information stored within said memory such that said battery-less sensor (40) is simultaneously wirelessly powered by and wirelessly transmits information to said reader (20) by modifying said wirelessly transmitted signal from said reader device (20).

## Claims

1. A battery-less sensor for an asset sensing and communication system, said battery-less sensor comprising in combination:
a transducer (42) operatively coupled to an asset (M) for sensing physical asset parameters and outputting analog signals (102) correlative thereto;
means (44, 48) for receiving and deriving power from a wirelessly transmitted signal;
means (52), operatively coupled to both said power deriving means and said transducer, for sampling and digitizing said analog signals (102) into digitized signals (104);
means (54), operatively coupled to both said receiving means and to said sampling and digitizing means, for modulating said received transmitted signal as a function of said digitized signals for transmitting data correlative to said sensed physical asset parameters such that said received transmitted signal is used both for wirelessly providing power to said battery-less sensor (40) and for wirelessly transmitting data from said battery-less sensor which is correlative to said sensed physical asset parameters.

2. A battery-less sensor for an asset sensing and communication system, said battery-less sensor comprising in combination:
a transducer (42) operatively coupled to an asset (M) for sensing physical asset parameters and outputting analog signals (102) correlative to said sensed physical asset parameters;
a coil (44) for receiving a transmitted signal;
power means (48) connected to said coil for deriving power from said received transmitted signal;
circuit means (46), connected to and powered by said power means, said circuit means including sampling means (52) and modulating means (54);
said sampling means (52), connected to said transducer (42), for sampling and digitizing said analog signals into digitized signals (104) correlative to said sensed physical asset parameters;
said modulating means (54), connected to said sampling means (52) and said coil (44), for modulating said received transmitted signal for transmitting data that is correlative to said sensed physical asset parameters of the asset, and
wherein said battery-less sensor (40) receives power from said wirelessly transmitted signal for powering said battery-less sensor and modulates said wirelessly transmitted signal with data correlative to said sensed physical asset parameters of the asset.

3. An asset parameter sensing and communication system comprising in combination:
a reader device (20) comprising in combination:
means (22, 24) for transmitting a signal through free space;
means (26, 28, 30), operatively coupled to said transmitting means, for detecting changes in said transmitted signal, converting said detected changes into digital values and transmitting said digital values to a portable data collector;
a battery-less sensor (40) comprising in combination:
a transducer (42) operatively coupled to an asset for measuring physical asset parameters and outputting analog signals (102) correlative thereto;
means (48) for receiving and deriving power from said transmitted signal;
means (52), operatively coupled to both said power deriving means and said transducer, for sampling and digitizing said analog signals into digitized signals (104) correlative to said measured physical asset parameters;
means (54), connected to said sampling and digitizing means, for modulating said received transmitted signal as a function of said digitized signals correlative to said measured physical asset parameters for creating a modulated transmitted signal by changing said transmitted signal transmitted from said reader; and
wherein said detecting means (26) of said reader detects and converts said modulated transmitted signal into digital values and transmits said digital values to the portable data collector (60) for further processing.

4. The device of claim 3 wherein said means for transmitting said signal through free space and said means for receiving said transmitted signal includes two tuned coils (24, 44) using an open air interface for transferring power and data correlative to said measured physical asset parameters across an open air interface using two tuned coils.

5. An asset parameter sensing and communication system comprising in combination:
two tuned coils (24, 44) using an open air interface for transmitting a signal through free space for wirelessly transmitting data correlative to measured physical asset parameters and power across an open air interface, said two tuned coils comprised of a sensor coil (44) and a reader coil (24);
a transducer (42) operatively coupled to an asset for measuring physical asset parameters and outputting analog signals (102) correlative thereto;
means (48), operatively coupled to said sensor coil, for deriving power from said transmitted signal;
means (52), operatively coupled to both said power deriving means and said transducer, for sampling and digitizing said analog signals into digitized signals correlative to said measured physical asset parameters;
means (54), connected to said sampling and digitizing means, for modulating said transmitted signal as a function of said digitized signals correlative to said measured physical asset parameters such that said modulating means causes changes in said transmitted signal; and
means (26, 28, 30), operatively coupled to said reader coil, for detecting said changes in said transmitted signal, converting said detected changes into digital values and transmitting said digital values to a portable data collector for monitoring the asset as a function of said measured physical asset parameters.

6. The device of any one of claims 3 to 5 wherein the asset is a machine.

7. The device of claim 6 wherein and said measured physical asset parameters are vibration signals engendered by the asset.

8. An asset parameter sensing and communication system comprising in combination:
a battery-less sensor (40) and a reader device (20);
said reader device (20) comprising in combination:
an oscillator means (22) for creating a time varying waveform having generally a constant frequency;
a reader coil (24) operatively coupled to said oscillator means for transmitting a signal through free space;
a demodulator means (26) operatively coupled to said reader coil for detecting changes in amplitude of the said transmitted signal;
a signal conditioning circuit (28) operatively coupled to said demodulator for transforming said detected changes in amplitude of said transmitted signal a series of digital pulses;
a first microprocessor (30) operatively coupled to said signal conditioning circuit for converting said series of digital pulses from said signal conditioning circuit into digital words and transmitting said digital words to a portable data collector (60) operatively coupled to said first microprocessor;
the battery-less sensor (40) comprising in combination:
a transducer (42) operatively coupled to an asset for measuring physical asset parameters and outputting analog signals correlative thereto;
a sensor coil (44) for receiving said transmitted signal from said reader coil;
power means (48) connected to said sensor coil for deriving power from said received transmitted signal;
circuit means (46), connected to and powered by said power means, said circuit means including sampling means (52) and modulating means (54);
said sampling means, connected to said transducer, for sampling and digitizing said analog signals into digitized signals correlative to said measured physical asset parameters;
said modulating means, connected to said sampling means and said sensor coil, for modulating said received transmitted signal as a function of said digitized signals for creating a modulated signal transmitting data to said reader device correlative to said measured physical asset parameters such that said battery-less sensor employs said transmitted signal for wirelessly receiving power from said reader device and wirelessly transmitting information to said reader device, and
wherein said modulated signal causes said changes in amplitude of said transmitted signal which are detected by said demodulator means, transformed by said signal conditioning circuit, converted by said microprocessor, and transmitted to the portable data collector by said microprocessor for monitoring the asset as a function of said measured physical asset parameters.

9. The asset parameter sensing and communication system of claim 8 wherein said battery-less sensor further includes a memory (59) in which coded asset information is stored, a processor means (58) operatively coupled to said memory and to said modulating means for reading said coded asset information from said memory and passing said coded information to said modulating means such that said modulating means modulates said transmitted signal as a function of said coded asset information for transmitting information correlative to said coded asset information such that said battery-less sensor simultaneously receives power and communicates information by manipulating said transmitted signal sent through free space.

10. A method for sensing and communicating asset parameters, the steps including:
mounting a battery-less sensor (40) to an asset for sensing physical asset parameters;
powering said battery-less sensor by holding a reader device (20) adjacent said battery-less sensor and wirelessly transmitting a signal from said reader device to said battery-less sensor;
sensing and digitizing physical asset parameters with said battery-less sensor;
modulating, with said battery-less sensor, said wirelessly transmitted signal as a function of said digitized physical asset parameters;
transmitting, with said battery-less sensor, data to said reader device (20) correlative to said sensed physical asset parameters such that said battery-less sensor (40) is wirelessly powered by said wirelessly transmitted signal from said reader device (20) and wirelessly transmits information to said reader device (20) by modulating said wirelessly transmitted signal from said reader device (20).
